(19) Europäisches Patentamt
European Patent Office
Office européen des brevets

(11) **EP 1 774 632 B1**

(12) **EUROPÄISCHE PATENTSCHRIFT**

(45) Veröffentlichungstag und Bekanntmachung des Hinweises auf die Patenterteilung:
**17.10.2007 Patentblatt 2007/42**

(21) Anmeldenummer: 05768297.3

(22) Anmeldetag: **29.07.2005**

(51) Int Cl.:
*H02G 15/068* (2006.01)   *H02G 15/06* (2006.01)

(86) Internationale Anmeldenummer:
**PCT/EP2005/008224**

(87) Internationale Veröffentlichungsnummer:
**WO 2006/015735 (16.02.2006 Gazette 2006/07)**

(54) **FREILUFTENDVERSCHLUSS**

OPEN-AIR CABLE SEALING END

FERMETURE DE TETE DE CABLE A L'AIR LIBRE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **06.08.2004 DE 102004038576
23.09.2004 DE 102004046134**

(43) Veröffentlichungstag der Anmeldung:
**18.04.2007 Patentblatt 2007/16**

(73) Patentinhaber: **Südkabel GmbH
68199 Mannheim (DE)**

(72) Erfinder:
• **KAUMANNS, Johannes
D-69121 Heidelberg (DE)**

• **SCHRÖDER, Gero
69469 Weinheim (DE)**
• **STROOT, Volker
68239 Mannheim (DE)**
• **WEINLEIN, Andreas
76187 Karlsruhe (DE)**

(74) Vertreter: **Schmitt, Meinrad
Kanzlei Reble & Klose,
Sophienstrasse 17
68165 Mannheim (DE)**

(56) Entgegenhaltungen:
**WO-A-03/085795          DE-A1- 1 906 875
US-A- 2 013 537**

**Beschreibung**

Die Erfindung bezieht sich auf einen Freiluftendverschluss für insbesondere kunststoffisolierte Hoch- und Höchstspannungskabel gemäß der im Oberbegriff des Patentanspruchs 1 angegebenen Merkmale.

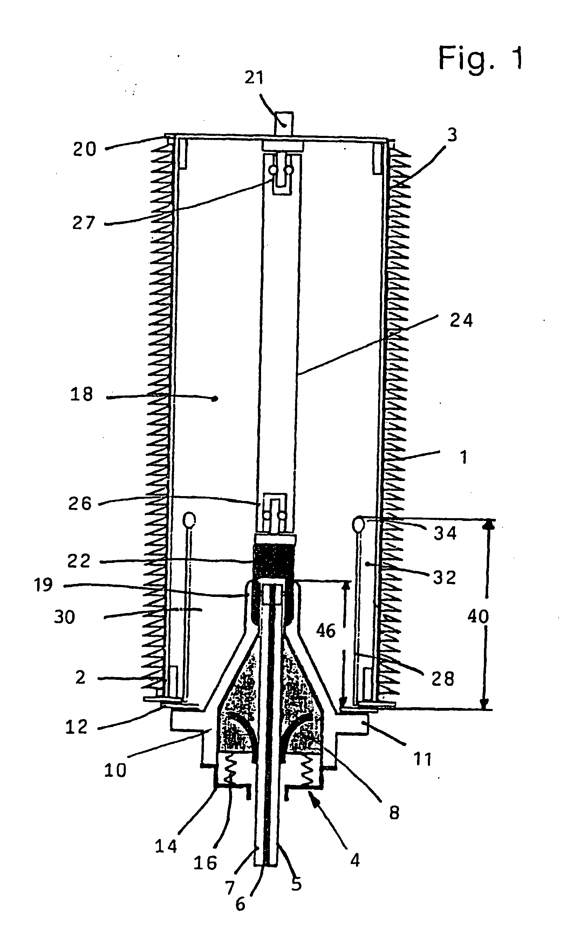

Aus der EP 1 494 329 A1 bzw. der WO 03/085 795 A1 ist ein derartiger Freiluftendverschluss bekannt. Ein erstes an Hand der Figur 5 erläutertes Ausführungsbeispiel enthält einen rohrförmigen Isolator aus Porzellan mit einem ersten, bei vertikaler Ausrichtung des Isolators unteren Endbereich und einem zweiten oberen Endbereich. Im ersten Endbereich ist ein aus Epoxidharz bestehender Aufnahmeisolator für einen als Feldsteuerelement ausgebildeten Stresskonus angeordnet. Das Kabelende ist durch den Aufnahmeisolator und im Wesentlichen die gesamte Länge des Isolators hindurch geführt und ist im Bereich des zweiten Isolatorendes mit einem Kontaktkörper verbunden, welcher durch eine am zweiten Endbereich des Isolators vorgesehene Kopfplatte nach außen aus dem Isolator herausgeführt ist. Der Innenraum des Isolators ist mit einem Isoliermedium gefüllt, welches das sich im Wesentlichen über die gesamte Länge erstreckende Kabelende sowie den im Bereich des zweiten Isolatorendes angeordneten Kontaktkörper umgibt. Mittels einer außerhalb des Isolators an dessen ersten Endbereich angeordneten Anpressvorrichtung wird zum Einen der Stresskonus in den Aufnahmekörper und zum Anderen das freie Kabelende bzw. ein dort vorgesehenes Kontaktelement an den genannten Kontaktkörper am zweiten oberen Ende des Isolators gepresst. Es müssen besondere Maßnahmen getroffen werden, damit Längenänderungen des durch den Isolator hindurch geführten Kabelendes, insbesondere aufgrund von Temperaturänderungen keine nachteiligen Folgen auf die elektrische Verbindung des freien Kabelendes mit dem Kontaktkörper ergeben. Bei etwaigen Revisions- oder Reparaturmaßnahmen ist das Isoliermedium aus dem Isolator zu entfernen bzw. nachfolgend wieder einzufüllen, wodurch ein nicht unerheblicher Arbeits- und Montageaufwand bedingt ist. In einer weiteren, an Hand der Figur 1 erläuterten Ausführungsform ist ein rohrförmiger Isolator aus einem Polymer vorgesehen, an dessen erstem Endbereich ein Verlängerungsrohr angeordnet ist. Der Isolator ist von einem durch den zweiten Endbereich desselben hindurch geführten Leiter durchdrungen, welcher innerhalb des Verlängerungsrohres einen einteilig ausgebildeten Aufnahmekörper für ein Kontaktelement des Kabels aufweist. Im Isolator ist eine den genannten Leiter und das Kontaktelement umgebende Isolierhülse aus Epoxidharz angeordnet, welche innerhalb des Verlängerungsrohres einen konusförmigen Aufnahmeteil für den mit dem Kabelende verbundenen Stresskonus enthält. Des Weiteren ist innerhalb des Isolators ein den genannten Leiter umgebendes Metallfitting zum Ausgleich des elektrischen Feldes im Bereich einer metallischen Bodenplatte vorgesehen. Der Aufnahmekörper und der konische Aufnahmeteil befinden sich außerhalb des Metallfittings. Insgesamt weist dieser Freiluftendverschluss eine erhebliche axiale Länge auf.

Bekanntlich werden Freiluftendverschlüsse zur Verbindung von Hochspannungskabeln mit Hochspannungs-Freileitungen benötigt. Typische moderne Lösungen enthalten zur Optimierung des Feldverlaufes im Bereich einer Absetzkante der äußeren Leitschicht des Kabels ein in einem Isolator angeordnetes Feldsteuerelement, welches bevorzugt als Stresskonus ausgebildet ist und von einem festen, flüssigen oder gasförmigen Isoliermedium umgeben ist. Bevorzugt gelangen als Isoliermedium Isolieröle, wie Polyolefine oder Silikonöle, oder gasförmige Isolierstoffe zum Einsatz. Der Isolator besitzt eine ausreichende elektrische Festigkeit in Luft sowie einen der Umgebung angepassten Kriechweg im Hinblick auf Schmutz, Feuchtigkeit, Salznebel und Eis und dergleichen. Das bearbeitete Kabel, und zwar Leiter mit Isolierung, ist durch das Feldsteuerelement hindurchgeführt und von diesem im Inneren des Isolators bis zu einem Hochspannung führenden Anschlusskörper bzw. einer Kopfarmatur durchgeführt und in geeigneter Weise mit dieser verbunden. Derartige Verschlüsse erfordern einen hohen Fertigungs- und Montageaufwand, wobei vor allem auf die Bearbeitung einer vergleichsweise großen Länge des Kabelendes verwiesen wird. Ferner ist die Durchführung des Kabelendes durch den Isolator und die Verbindung des Kabelendes mit einer Kopfarmatur mit einem erheblichen Fertigungs- und Montageaufwand verbunden. Auch etwaige Service- oder Reparaturarbeiten erfordern einen beträchtlichen zeitlichen Aufwand.

Hiervon ausgehend liegt der Erfindung die Aufgabe zugrunde, den Freiluftendverschluss der genannten Art dahingehend weiterzubilden, dass die aufgezeigten Nachteile vermieden werden und eine funktionssichere Verbindung des Kabels mit dem Freiluftendverschluss gewährleistet ist. Der Einsatz eines zusätzlichen elastischen bzw. flüssigen Isoliermediums in der Umgebung des Feldsteuerelements soll vermieden werden und die bei derartigen Isoliermedien erforderlichen Abdichtmaßnahmen sollen entfallen. Des Weiteren soll bei Bedarf das Kabel mit einem geringen Aufwand und unter Vermeidung aufwändiger Arbeiten vom Isolator gelöst werden können.

Die Lösung dieser Aufgabe erfolgt gemäß der im Patentanspruch 1 angegebenen Merkmale.

Der erfindungsgemäße Freiluftendverschluss zeichnet sich durch eine funktionssichere und den betrieblichen Anforderungen in hervorragender Weise entsprechende Konstruktion aus. Durch die steckbare Technik wird eine sehr kurze Baulänge erreicht, und der Einsatz eines zusätzlichen elastischen Isoliermediums, welches regelmäßig flüssig oder gasförmig ausgebildet ist, wird vermieden. Aufgrund der Verwendung des steckbaren Kabelendschlusses entfallen Abdichtmaßnahmen, um einen Verlust des Isoliermediums durch Leckagen zu vermeiden, wobei die verwendete Stecktechnik auch als "trockene" Endverschlusstechnik bezeichnet werden kann. Infolge der steckbaren Ausführung ist in einfacher Weise die Möglichkeit der Trennung des Kabels vom Isolator und/oder der am Anschlusskörper desselben anliegenden Hochspannung geschaffen. Der erfindungsgemäße Freiluftendverschluss mit dem integrierten steckbaren Kabelendverschluss gewährleistet in vorteilhafter Weise eine kurze Montagezeit und eine "trockene" Lösung im Bereich des Kabelendes. Des Weiteren ist die Bearbeitung einer nur vergleichsweise kurzen Kabellänge erforderlich und zudem können vor der Montage und/oder Herstellung der Steckverbindung des Kabelendes mit dem Isolator die verschiedenen Baukomponenten problemlos einer Vorprüfung unterzogen werden. In bevorzugter Weise ist der steckbare Kabelendverschluss nach dem Innenkonus-Prinzip in den Isolator für Freiluftanwendungen eingebaut.

Der vorgeschlagene steckbare Freiluftendverschluss gelangt insbesondere bei den höchsten Spannungsebenen und großen Kabeldurchmesser in vorteilhafter Weise zum Einsatz, zumal hierbei der notwendige große Durchmesser des Isolators aus geometrischen Gründen, insbesondere im Hinblick auf den Platzbedarf des Feldsteuerelements, genutzt werden kann. Von besonderer Bedeutung ist die Feldsteuerelektrode, mittels welcher nach dem hochspannungstechnischen Prinzip einer vorgeschobenen Elektrode das elektrische Feld im Bereich des ersten Endes des Iso-lators, insbesondere im Bereich einer dort vorhandenen Grundplatte, abgeschwächt wird, um eine optimierte Spannungsfestigkeit im Außenraum und innerhalb des Isolators zu erhalten. Der im ersten Endbereich des Isolators befindliche Teil der Feldsteuerelektrode weist erfindungsgemäß eine vorgegebene axiale Länge auf, welche zumindest näherungsweise gleich groß ist wie die axiale Länge des im Innenraum des Isolators angeordneten Teils des Aufnahmeisolators. Der Aufnahmeisolator enthält an seinem im Innenraum des Isolators angeordneten Ende einen Kontaktkörper. Dieser Kontaktkörper ist zum einen zur Herstellung der elektrischen Verbindung mit dem elektrischen Leiter des Kabels bzw. der Kabelseele ausgebildet und zum anderen zur elektrischen Verbindung mit einem Verbindungsleiter, welcher durch den Isolator bis zu dessen zweitem Endbereich durchgeführt ist und dort mit einem aus dem Innenraum nach außen geführten Anschlusskörper verbunden ist. In bevorzugter Weise ist die axiale Länge der Feldsteuerelektrode derart vorgegeben, dass die Feldsteuerefektrode zumindest näherungsweise auch den Kontaktkörper überragt, so dass auch im Bereich des Kontaktkörpers eine Optimierung des Feldverlaufes erreicht wird. Mittels des Feldsteuerelements wird der elektrische Feldverlauf, insbesondere im Bereich der Absetzkante, einer äußeren Leitschicht des Kabels optimiert. Im Innenraum des Isolators ist erfindungsgemäß ein elektrischer Verbindungsleiter zwischen dem am Aufnahmeisolator angeordneten und mit diesem fest verbundenen Kontaktkörper und dem am zweiten Endbereich des Isolators angeordneten Anschlusskörper vorhanden. Der Kontaktkörper ist in Richtung zum Kabelende hin bevorzugt topfförmig ausgebildet und dient zur Aufnahme des freien Kabelendes und insbesondere zur elektrischen Verbindung mit einem am freien Kabelende angeordneten elektrischen Kontaktelement. Das zum zweiten Endbereich weisende Ende des Aufnahmeisolators umgreift zumindest in axialer Richtung teilweise den Kontaktkörper, welcher im Übrigen vom Isoliermedium umgeben ist.

Eine punktuelle Feldstärkeüberlastung im Außenraum wird vermieden, wobei insbesondere der Abstand der Feldsteuerelektrode in dem dieselbe umgebenden Außenraum in optimaler Weise vorgegeben wird. Darüber hinaus wird der Abstand im Innenbereich der Feldsteuerelektrode bzw. zum stromführenden Leitungselement innerhalb des Isolators derart groß vorgegeben, dass eine sichere Spannungsfestigkeit erhalten wird. Die Feldsteuerelektrode ist als bevorzugt im Wesentlichen rotationssymmetrischer Hohlkörper aus elektrisch leitfähigem Material ausgebildet. Ferner enthält die bevorzugt aus Metallblech bestehende Feldsteuerelektrode an ihrem dem zweiten Endbereich des Isolators zugewandten Ende einen insbesondere nach außen mit einem vorgegebenen Radius umgebogenen Rand.

Des Weiteren ist von besonderer Bedeutung, dass die elektrischen Feldstärken am Feldsteuerelement wesentlich von der Formgebung und/oder dem Radius am Ende der Feldsteuerelektrode erfindungsgemäß beeinflusst wird. Um einerseits das elektrische Feld auf den Aufnahmeisolator, welcher insbesondere als ein Epoxidharz-Isolator ausgebildet ist, nicht zu überhöhen, wird erfindungsgemäß ein Mindestdurchmesser der Feldsteuerelektrode vorgegeben. Darüber hinaus erweist sich als besonders vorteilhaft, die Baulänge der Feldsteuerelektrode um einen vorgegebenen Wert größer vorzugeben als die Baulänge des Aufnahmeisolators und/oder als die Gesamtlänge zusammen mit dem genannten Kontaktkörper. Hierdurch wird einerseits das elektrische Feld um den Aufnahmeisolator eindeutig vorgegeben und andererseits der Bereich des einen Ende des Isolators und/oder die dort vorgesehene Grundplatte des Freiluftendverschlusses nach dem Prinzip der vorgeschobenen Elektrode bezüglich des elektrischen Feldes entlastet. Ferner hat es sich als besonders vorteilhaft erwiesen, den Abstand zum Aufnahmeisolator, welcher insbesondere als Epoxidharz-Isolator ausgebildet ist, hinreichend groß derart vorzugeben, dass die Außengrenzfläche des Aufnahmeisolators und/ oder des Gießharz-Isoliermediums aufgrund einer stark tangentialen elektrischen Feldkomponente nicht überbeansprucht wird.

Besondere Weiterbildungen und Ausgestaltungen der Erfindung sind in den Unteransprüchen sowie der nachfolgenden Beschreibung eines besonderen Ausführungsbeispiels angegeben.

Die Erfindung wird nachfolgend anhand des in der Zeichnung dargestellten besonderen Ausführungsbeispiels näher erläutert, ohne dass insoweit eine Beschränkung erfolgt. Es zeigen:

Fig. 1 eine Prinzipskizze des steckbaren Freiluftendverschlusses,

Fig. 2 teilweise den Freiluftendverschluss im entkoppelten Zustand ohne Feldsteuerelektrode und Isolator,

Fig. 3    teilweise den Freiluftendverschluss gemäß Fig. 1,

Fig. 4    vergrößert das Detail IV gemäß Fig. 3.

Fig. 1 zeigt in einer Prinzipdarstellung den Freiluftendverschluss mit einem Isolator 1, welcher einen ersten Endbereich 2 und einen zweiten Endbereich 3 aufweist, und einem steckbaren Kabelendverschluss 4. Der Kabelendverschluss 4 enthält das Ende eines Kabels 5, welches in bekannter Weise eine Kabelseele bzw. einen elektrischen Leiter 6 und eine diese umgebende Isolationsschicht 7 besitzt, und ein bevorzugt als Stresskonus ausgebildetes Feldsteuerelement 8 enthält. Der Isolator 1 kann dabei zylindrisch sein oder sich nach oben konisch verjüngen. Im Bereich des ersten, bei vertikaler Ausrichtung des Isolators 1 unteren Endbereich desselben ist ein Aufnahmeisolator 10 angeordnet, welcher bevorzugt als Epoxidharz-Isolator ausgebildet ist. Der Aufnahmeisolator 10 besitzt bevorzugt einen radial nach außen gerichteten Flansch 11 und ist insbesondere über diesen und/oder über eine Grundplatte 12 mit dem Isolator 1 fest verbunden. In besonders vorteilhafter Weise ist die Verbindung zwischen dem Aufnahmeisolator 10 und dem Isolator 1 druckdicht und/oder feuchtigkeitsdicht und/oder flüssigkeitsdicht ausgebildet. Das Kabel 5 mit dem Feldsteuerelement 8 des erfindungsgemäß verwendeten steckbaren Kabelendverschlusses kann bei Bedarf vom Aufnahmeisolator 10 und somit vom Isolator 1 entkoppelt werden. Der Kabelendverschluss 4 enthält einen Verbindungskörper 14 zur lösbaren Verbindung, insbesondere mit dem Aufnahmeisolator 10, wobei das Feldsteuerelement 8 in zweckmäßiger Weise mittels eines Federelements 16 abgestützt ist und mit vorgegebener Vorspannung in und/oder gegen den Aufnahmeisolator 10 gedrückt wird. Erfindungsgemäß ist der Kabelendverschluss in vorteilhafter Weise nach dem Innenkonus-Prinzip aufgebaut. Wie ersichtlich, ragt erfindungsgemäß der Aufnahmeisolator zumindest teilweise in den mit einem Isoliermedium gefüllten Innenraum 18 des Isolators 1 hinein. Insbesondere der in den Innenraum 18 des Isolators 1 hineinragende Teil des Aufnahmeisolators 10 ist innen konisch ausgebildet und/oder enthält eine konische Innenfläche für eine hierzu korrespondierend und/oder angepasst ausgebildete Anlagefläche des Feldsteuerelements 8. Es sei besonders darauf hingewiesen, dass mittels des Feldsteuerelements 8 der elektrische Feldverlauf, insbesondere im Bereich einer Absetzkante der äußeren Leitschicht des Kabels 5 optimiert ist.

Am zweiten oder oberen Endbereich des Isolators 1 sind eine Kopfplatte 20 und ein Anschlusskörper 21 vorgesehen, welcher den Hochspannung führenden Anschlusspunkt bildet. Die Verbindung zwischen der Kopfplatte 20 und dem Isolator 1 ist bevorzugt druckdicht und/oder feuchtigkeitsdicht und/oder flüssigkeitsdicht ausgebildet. Das Isoliermedium im Innenraum 18 des Isolators 1 ist bevorzugt gasförmig, wie insbesondere SF6, N2, SF6-N2 oder Gemische derselben. Ferner kann ein flüssiges, schaumartiges oder gelartiges Isoliermedium verwendet werden, wobei bevorzugt ein gasförmiges Ausgleiclisvolumen im oberen Bereich des Innenraums 18 des Isolators 1 oder in einem externen Ausgleichsbehälter vorgesehen ist. Des Weiteren ist im Innenraum 18 des Isolators 1 zwischen einem mit dem freien Ende 19 des Aufnahmeisolators 10 verbundenen Kontaktkörper 22 und dem genannten Anschlusskörper 21 ein Verbindungsleiter 24 vorgesehen. Das freie Ende 19 ist bevorzugt topfförmig ausgebildet und umgibt den zumindest teilweise in das freie Ende 19 eingreifenden Kontaktkörper 22. Der Kontaktkörper 22 ist bevorzugt als Steckverbindung für das freie Kabelende bzw. dessen Kontaktelement 25 ausgebildet, und zwar bevorzugt gleichfalls topfförmig und/oder in Richtung zum ersten Endbereich 2 des Isolators 1 offen ausgebildet. Am Ende des Kabels 5 ist ein mit dem Kontaktkörper 22 korrespondierendes, insbesondere als Steckverbindung ausgebildetes Kontaktelement 25 angeordnet. Beim Entkoppeln des Kabelendverschlusses 4 wird die elektrische Steckverbindung des Kontaktelements 25 mit dem Kontaktkörper 22 entkoppelt. Die erfindungsgemäß ausgebildete und/oder im Inneren des Isolators 1 am Ende 19 des Aufnahmeisolators 10 angeordnete Steckverbindung ermöglicht problemlos und gleichwohl funktionssicher die Herstellung und bedarfsweise Trennung der Verbindung des Kabels 5 mit dem Isolator 1. In bevorzugter Weise ist wenigstens ein Ende der Leiterverbindung 24 mit dem Kontaktkörper 22 bzw. dem Anschlusskörper 20 als bewegliche Führung und/oder als axial bewegbarer und/oder verschiebbarer Anschluss 26, 27 zwecks Längenausgleich ausgebildet.

Erfindungsgemäß ist im Innenraum 18 des Isolators 1 im Bereich des Aufnahmeisolators 10 eine Feldsteuerelektrode 28 angeordnet, welche bevorzugt mit der Grundplatte 12 am einen Ende des Isolators 1 verbunden ist. Die Feldsteuerelektrode 28 umgibt den Aufnahmeisolator 10 und bevorzugt erfindungsgemäß auch den Kontaktkörper 22 und/oder den Anschlusskörper 20 und/oder den Anschluss 26. Im Rahmen der Erfindung ist die axiale Länge 40 der Feldsteuerelektrode 28 wenigstens so groß wie die axiale Länge 46 des im Innenraum 18 angeordneten Teils des Aufnahmeisolators 10. Die bevorzugt zylindrisch ausgebildete Feldsteuerelektrode 28 gewährleistet nach dem hochspannungstechnischen Prinzip der vorgeschobenen Elektrode eine Abschwächung des elektrischen Feldes, vor allem im Bereich der Grundplatte 12 und/oder im Bereich des im Innenraum 18 angeordneten Teiles des Aufnahmeisolators 10 und/oder dem mit dem Aufnahmeisolator 10 verbundenen Kontaktkörpers 22. Alternativ kann die Feldsteuerelektrode 28 einen zur Kopfplatte sich bevorzugt konisch verjüngenden Außendurchmesser aufweisen. Radial innerhalb der Feldsteuerelektrode 28 zum Aufnahmeisolator 10 ist ein Innenbereich 30 und radial außen zum Isolator 1 ist ein Außenbereich 32 vorhanden, wobei die Feldsteuerelektrode 28 in Richtung zum Anschlusskörper 20 ein freies Ende 34 aufweist. Die Dimensionierung der Feldsteuerelektrode 28 wird weiter unten im einzelnen erläutert. Wie aus Figur 1 ersichtlich, umgibt die erfindungsgemäß angeordnete und/oder ausgebildete Feldsteuerelektrode 28 nicht nur vollständig den Aufnahmeisolator 10, sondern in bevorzugter Weise auch den Kontaktkörper 22 sowie insbesondere zumindest teilweise auch den Anschluss 26 des Leiterverbinders 24 mit dem Kontaktkörper 22, so dass erfindungsgemäß auch im Bereich des Kontaktkörpers 22 ein optimierter Feldverlauf sicher gestellt ist. Die Feldsteuerelektrode ist als ein zur Längsachse des Isolators 1 bevorzugt rotationssymmetrischer Hohlkörper ausgebildet und insbesondere aus Metallblech gefertigt. Das in Figur 1 nur schematisch angedeutete freie Ende 34 ist in bevorzugter Weise als ein nach außen gebogener Rand ausgebildet.

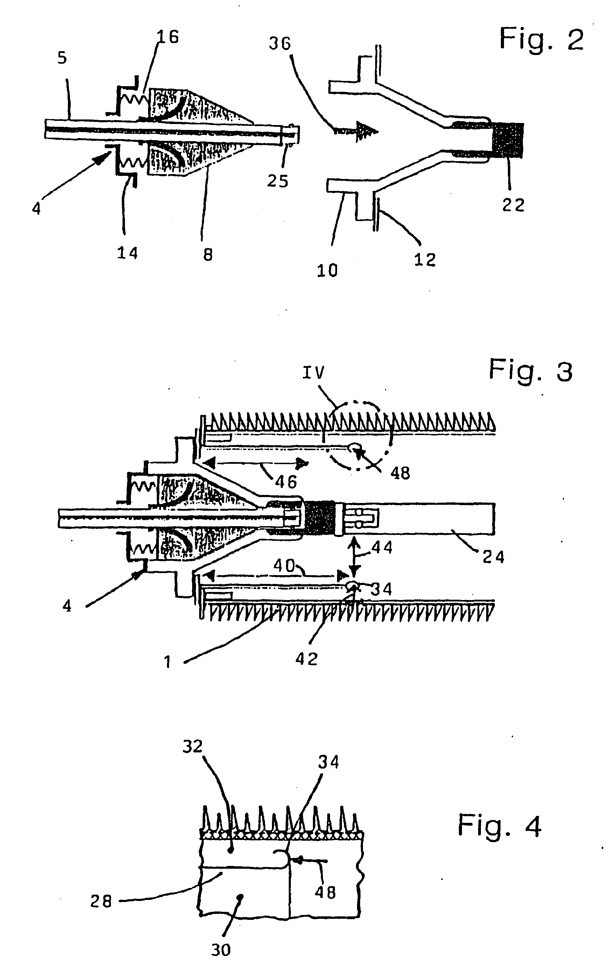

Fig. 2 zeigt teilweise den Freiluftendverschluss mit dem entkoppelten steckbaren Kabelendverschluss 4. Das bevorzugt aus Silikonkautschuk bestehende Feldsteuerelement 8 besitzt eine zumindest teilweise konische Außenkontur, wobei die zugeordnete Innenkontur des Aufnahmeisolators 10 korrespondierend zu der des Feldsteuerelements 8 ausgebildet ist. Wie ersichtlich, ist das am Ende des Kabels 5 fest anliegende Feldsteuerelement 8 mittels des mechanischen Federelements 16 auf dem Verbindungskörper 14 abgestützt. Es sei angemerkt, dass das Kabel 5 beispielsweise als ein VPE-isoliertes Kabel ausgebildet ist, doch können im Rahmen der Erfindung auch andere isolierte Kabel vorgesehen sein, beispielsweise EPR oder PE isolierte Kabel. Zur Herstellung der Verbindung wird der Kabelendverschluss 4 in Richtung des Pfeiles 36 in den Aufnahmeisolator 10 eingeführt, wobei die elektrische Verbindung zwischen dem Kontaktelement 24 und dem Kontaktkörper 22 hergestellt wird. Ferner wird mittels des Verbindungselements 14 und hier nicht weiter dargestellter Schrauben oder dergleichen eine feste, gleichwohl bei Bedarf lösbare Verbindung mit dem Aufnahmeisolator 10 und/oder der Grundplatte 12 und/oder dem Isolator hergestellt. Aufgrund der erfindungsgemäßen Verwendung des steckbaren Kabelendverschlusses besteht jederzeit die einfache Möglichkeit, das Kabel 5 von dem Freiluftendverschluss bzw. dem hochspannungsführenden Kabel zu trennen, ohne hierbei aufwändige Arbeiten am Freiluftendverschluss vornehmen zu müssen.

Fig. 3 zeigt teilweise den Freiluftendverschluss mit dem verwendeten Kabelendverschluss 4 und der erfindungsgemäß zum Einsatz gelangenden Feldsteuerelektrode 28. Die Feldsteuerelektrode 28 besitzt eine Länge 40 und ist in einem Abstand 42 zur Innenfläche des Isolators 1 angeordnet. Des Weiteren weist die Feldsteuerelektrode 28, insbesondere deren freies Ende 34, zum Zentralleiter bzw. der Verbindungsleiter 24 einen inneren Abstand 44 auf. Der bevorzugt als Epoxidharzisolator ausgebildete Aufnahmeisolator 10 besitzt im Inneren des Isolators und/oder bezogen auf die Grundplatte 12 eine axiale Länge 46. Des Weiteren weist die Feldsteuerelektrode 28 an ihrem freien Ende 34 eine vorgegebene Randbegrenzung und/oder Formgebung, insbesondere mit einem Radius 48 auf. Erfindungsgemäß ist die verwendete Feldsteuerelektrode 28 derart dimensioniert und angeordnet, dass aufgrund deren Länge 40 und/oder der Abstände 42, 44 und/oder der Formgebung bzw. des Radius 48 ein optimiertes elektrisches Feld der Gesamtanordnung vorgegeben ist. In bevorzugter Weise ist die Dimensionierung derart vorgegeben, dass folgende Verhältnisse gelten:

$$0{,}03 < \text{Radius } 48 / \text{Abstand } 44 < 0{,}7$$

$$0{,}3 < \text{Länge } 40 / \text{Länge } 46 < 3$$

$$0{,}1 < \text{Abstand } 42 / \text{Abstand } 44 < 10$$

Bevorzugt liegt das Verhältnis von Radius 48 zum Abstand 44 zwischen 0,1 bis 0,5. Ferner liegt das Verhältnis von der axialen Länge 40 des Feldsteuerelements 28 zur axialen Länge 46 des Aufnahmeisolators 10 zwischen 1 bis 2. Auch hat sich für das Verhältnis vom Abstand 42 zum inneren Abstand 44 Werte zwischen 1 bis 7 als besonders zweckmäßig erwiesen.

Aufgrund der erfindungsgemäß verwendeten Feldsteuerelektrode 28 und/oder deren Dimensionierung wird eine punktuelle Feldstärkeüberlastung im Außenraum 32 zwischen der Feldsteuerelektrode und der Innenfläche des Isolators 1 vermieden. Des Weiteren wird eine hinreichend große Spannungsfestigkeit aufgrund der Vorgabe des Abstandes 44 sichergestellt. Ferner wird durch die Formgebung und/oder den Radius 48 des freien Endes 34 der Feldsteuerelektrode 28 die elektrischen Feldstärke am Feldsteuerelement optimiert. Infolge der Vorgabe eines Mindestdurchmessers der Feldsteuerelektrode 28 wird eine unzulässige Überhöhung des elektrischen Feldes am Aufnahmeisolator vermieden. Des Weiteren ist von besonderer Bedeutung, dass die Baulänge 40 der Feldsteuerelektrode 28 um einen vorgegebenen Wert größer ist als die Baulänge 46 des Aufnahmeisolators 10. Somit wird einerseits das elektrische Feld um den Aufnahmeisolator 10 und bevorzugt auch um den Kontaktkörper 22 und insbesondere um den Anschlusskörper 20 und/oder den Kontaktkörper 26 eindeutig vorgegeben. Andererseits wird das elektrische Feld an dem ersten bzw. zweiten Ende des Freiluftendverschlusses und/oder im Bereich der Grundplatte nach dem Prinzip der vorgeschobenen Elektrode bezüglich des elektrischen Feldes entlastet. Schließlich wird durch die vorgegebene Dimensionierung der Abstand 44 der Feldsteuerelektrode 28 zum Aufnahmeisolator 10 hinreichend groß derart vorgegeben, dass die Außengrenzfläche und/oder Gießharz-Isoliermedium mit einer stark tangentialen elektrischen Feldkomponente nicht überbeansprucht wird.

In Fig. 4 ist vergrößert gemäß Detail IV aus Fig. 3 das freie Ende 34 der Feldsteuerelektrode 28 dargestellt. Das freie Ende 34 ist bevorzugt durch den im vorgegebenen Radius 48, insbesondere nach außen, gebogenen Rand der Feldsteuerelektrode 28 ausgebildet. Die Feldsteuerelektrode 28 ist als ein Hohlkörper oder Rohr, bevorzugt aus elektrisch leitfähigem Material, wie insbesondere Metallblech gebildet, wobei das Umbiegen des genannten Randes mit dem vorgegebenen Radius 48 mit einem geringen Fertigungsaufwand realisiert wird.

**Bezugszeichen**

| | |
|---|---|
| 1 | Isolator |
| 2 | erster Endbereich von 1 |
| 3 | zweiter Endbereich von 1 |
| 4 | Kabelendverschluss |
| 5 | Kabel |
| 6 | elektrischer Leiter |
| 7 | Isolationsschicht |
| 8 | Feldsteuerelement |
| 10 | Aufnahmeisolator / Epoxidharz-Isolator |
| 11 | Flansch von 10 |
| 12 | Grundplatte |
| 14 | Verbindungskörper |
| 16 | Federelement |
| 18 | Innenraum von 1 |
| 19 | freies Ende von 10 |
| 20 | Kopfplatte |
| 21 | Anschlusskörper |
| 22 | Kontaktkörper |
| 24 | Verbindungsleiter / Zentralleiter im Isolator 1 |
| 25 | Kontaktelement / Leiterverbindung des Kabels 5 |
| 26, 27 | Anschluss / bewegliche Führung |
| 28 | Feldsteuerelektrode |
| 30 | Innenbereich |
| 32 | Außenbereich |
| 34 | freies Ende von 28 |
| 36 | Pfeil |
| 40 | Länge von 28 |
| 42 | Abstand zu 1 |
| 44 | innerer Abstand |
| 46 | axiale Länge von 10 |
| 48 | Radius von 34 |

**Patentansprüche**

1. Freiluftendverschluss für Hochspannungskabel (5), enthaltend einen Isolator (1) mit einem ersten und zweiten Endbereich (2, 3), einen im ersten Endbereich (2) zumindest teilweise in einen Innenraum (18) des Isolators (1) hineinragenden Aufnahmeisolator (10), ein mit dem Kabel (5) verbundenes, insbesondere als Stresskonus ausgebildetes, Feldsteuerelement (8), welches mit dem Aufnahmeisolator (10) steckbar verbunden und bei Bedarf von diesem lösbar ist, sowie einen am zweiten Endbereich (3) des Isolators (1) angeordneten. Anschlusskörper (21), mit welchem das Kabel (5) elektrisch verbindbar ist, wobei im Innenraum (18) ein Isoliermedium vorgesehen ist,

**dadurch gekennzeichnet, dass** im innenraum (18) eine den Aufnahmeisolator (10) mit einem vorgegebenen Abstand umgebende Feldsteuerelektrode (28) angeordnet ist, deren Länge (40) zumindest näherungsweise gleich groß ist wie die axiale Länge (46) des im Innenraum (18) angeordneten Teils des Aufnahmeisolators (10), dass der Aufnahmeisolator (10) an seinem im Innenraum (18) angeord eten Ende (19) einen Kontaktkörper (22) aufweist, mit welchem der elektrische Leiter (6) des Kabels (5) elektrisch verbunden und bei Bedarf lösbar ist, und dass im Innenraum (18) zwischen dem genannten Kontaktkörper (22) und dem am zweiten Endbereich (3) vorgesehenen Anschlusskörper (21) ein mit diesem elektrisch verbundener Verbindungsleiter (24) vorgesehen ist.

2.  Freiluftendverschluss nach Anspruch 1, **dadurch gekennzeichnet, dass** die Feldsteuerelektrode (28) im Inneren (18) des Isolators (1) den Aufnahmeisolator (10) in einem vorgegebenen Wert überragt und/oder dass das Verhältnis der Länge (40) der Feldsteuerelektrode (28) zur Länge (46) des Aufnahmeisolators (10) im Bereich zwischen 0,3 bis 3, bevorzugt zwischen 1 bis 2, vorgegeben ist.

3.  Freiluftendverschluss nach einem der Anspruch 1 oder 2 , **dadurch gekennzeichnet, dass** das freie Ende (34) der Feldsteuerelektrode (28) einen vorgegebenen Radius (48) aufweist und/oder dass das Verhältnis des genannten Radius (48) zum inneren Abstand (44) zwischen dem freien Ende (34) und/oder der Feldsteuerelektrode (28) zu dem Isolator (1) angeordneten Verbindungsleiter (24) im Bereich zwischen 0,03 bis 0,7, bevorzugt zwischen 0,1 bis 0,5, vorgegeben ist.

4.  Freiluftendverschluss nach einem der Ansprüche 1 bis 3, **dadurch gekennzeichnet, dass** die Feldsteuerelektrode (28), insbesondere deren freies Ende (34), zu dem umgebenden Isolator (1) einen vorgegebenen Abstand (42) aufweist und/oder einen vorgegebenen inneren Abstand (44) zum Verbindungsleiter (24) aufweist und/oder dass das Verhältnis des Abstandes (42) zum inneren Abstand (44) im Bereich zwischen 0,1 bis 10, bevorzugt zwischen 1 bis 7 vorgegeben ist.

5.  Freiluftendverschluss nach einem der Ansprüche 1 bis 4, **dadurch gekennzeichnet, dass** als Isoliermedium im Inneren des Isolators (1) ein gasförmiges Isoliermedium, bevorzugt mit einem vorgegebenen Überdruck, ist und/ oder dass als Isoliermedium SF6 und/oder N2 und/oder SF6-N2 und/oder Gemischen aus diesen vorgesehen ist und/oder dass das Isoliermedium einen vorgegebenen Überdruck, insbesondere im Bereich zwischen 1-10 bar aufweist.

6.  Freiluftendverschluss nach einem der Ansprüche 1 bis 4, **dadurch gekennzeichnet, dass** als Isoliermedium im Inneren des Isolators (1) ein flüssiges oder gelartiges Isoliermedium vorgesehen ist und/oder dass ein gasförmiges Ausgleichsvolumen, bevorzugt im oberen Bereich des Innenraumes (18) des Isolators oder in einem externen Ausgleichsbehälter vorgesehen ist.

7.  Freiluftendverschluss nach einem der Ansprüche 1 bis 4, **dadurch gekennzeichnet, dass** im Inneren des Isolators (1) ein schaumartiges Isoliermedium vorgehen ist.

8.  Freiluftendverschluss nach einem der Ansprüche 1 bis 7, **dadurch gekennzeichnet, dass** der Isolator (1) als ein Verbuhdisotator ausgebildet ist, welcher bevorzugt als ein GfK-Rohr mit Silikonschirmen ausgebildet ist, oder dass der Isolator (1) als Porzellanisolator ausgebildet ist.

9.  Freiluftendverschluss nach einem der Ansprüche 1 bis 8, **dadurch gekennzeichnet, dass** die Feldsteuerelektrode (28) einen sich in Richtung zum Anschlusskörper (21), welcher insbesondere in einer am zweiten Endbereich (3) angeordneten Kopfplatte vorgesehen ist, konisch verjüngenden Außendurchmesser aufweist.

10. Freiluftendverschluss nach einem der Ansprüche 1 bis 9, **dadurch gekennzeichnet, dass** die Feldsteuerelektrode (28) auch den mit dem Aufnahmeisolator (10) verbundenen Kontaktkörper (22) umgibt, welcher bevorzugt zumindest teilweise in das topfförmig ausgebildete und in Richtung zum zweiten Endbereich (3) des Isolators (1) offene Endteil (19) des Aufnahmeisolators (10) eingesetzt ist, und/oder dass die axiale Länge (40) der Feldsteuerelektrode (28) derart vorgegeben ist, dass zusätzlich der Anschluss (26) des Verbindungsleiters (24) zumindest teilweise in die Feldsteuerelektrode (28) hineinragt.

**Claims**

1.  Outdoor termination for high-voltage cables (5), comprising an insulator (1) with a first and second end region (2, 3), a receptacle insulator (10) projecting at least in part into an interior (18) of the insulator (1) in the first end region (2), a field control element (S), configured in particular as a stress cone, connected to the cable (5) and which is connected to the receptacle insulator (10) by plugging and releasable therefrom as required, and comprising a connecting body (21) arranged at the second end region (3) of the insulator (1) and to which the cable (5) can be connected electrically, an insulating medium being provided in the interior (18), **characterised in that**, in the interior (18) and surrounding the receptacle insulator (10) at a predetermined distance, there is arranged a field control electrode (28), the length (40) thereof being at least approximately identical to the axial length (46) of the portion of the receptacle insulator (10) arranged in the interior (18), **in that** the receptacle insulator (10), at the end (19) thereof arranged in the interior (18), comprises a contact body (22) to which the electrical conductor (6) of the cable (5) is electrically connected and can be released as required, and **in that** a connecting conductor (24) is provided in the interior (18) between the aforementioned contact body (22) and the connecting body (21) provided in the second end region (3) and is electrically connected to said connecting body.

2. Outdoor termination according to claim 1, **characterised in that** the field control electrode (28) projects further by a predetermined amount into the interior (18) of the insulator (1) than the receptacle insulator (10) and/or **in that** the ratio of the length (40) of the field control electrode (28) to the length (46) of the receptacle insulator (10) is predetermined in the range between 0.3 and 3, preferably between 1 and 2.

3. Outdoor termination according to either claim 1 or claim 2, **characterised in that** the free end (34) of the field control electrode (28) has a predetermined radius (48) and/or **in that** the ratio of the aforementioned radius (48) to the inner distance (44) from the free end (34) and/or the field control electrode (28) to the connecting conductor (24) arranged within the insulator (1) is predetermined in the range between 0.03 and 0.7, preferably between 0.1 and 0.5.

4. Outdoor termination according to any one of claims 1 to 3, **characterised in that** the field control electrode (28), in particular the free end (34) thereof, is at a predetermined distance (42) from the surrounding insulator (1) and/or is at a predetermined inner distance (44) from the connecting conductor (24) and/or **in that** the ratio of the distance (42) to the inner distance (44) is predetermined in the range between 0.1 and 10, preferably between 1 and 7.

5. Outdoor termination according to any one of claims 1 to 4, **characterised in that**, as the insulating medium, there is provided a gaseous insulating medium in the interior of the insulator (1), preferably with a predetermined overpressure and/or **in that** SF6 and/or N2 and/or SF6-N2 and/or mixtures thereof are provided as the insulating medium and/or **in that** the insulating medium has a predetermined overpressure, in particular in the range between 1-10 bar.

6. Outdoor termination according to any one of claims 1 to 4, **characterised in that** a liquid or gel-like insulating medium is provided in the interior of the insulator (1) as the insulating medium and/or **in that** a gaseous compensating volume is provided, preferably in the upper region of the interior (18) of the insulator or in an external compensating vessel.

7. Outdoor termination according to any one of claims 1 to 4, **characterised in that** a foam-like insulating medium is provided in the interior of the insulator (1).

8. Outdoor termination according to any one of claims I to 7, **characterised in that** the insulator (1) is configured as a composite insulator, which is preferably configured as a GRP tube with silicon shields, or **in that** the insulator (1) is configured as a porcelain insulator.

9. Outdoor termination according to any one of claims 1 to 8, **characterised in that** the field control electrode (28) has a conically narrowing outer diameter in the direction towards the connecting body (21), which is provided in particular in a cover plate arranged at the second end region (3).

10. Outdoor termination according to any one of claims 1 to 9, **characterised in that** the field control electrode (28) also surrounds the contact body (22) which is connected to the receptacle insulator (10) and which is preferably inserted at least in part into the end portion (19) of the receptacle insulator (10) which is configured so as to be cup-shaped and is open in the direction of the second end region (3) of the insulator (1) and/or **in that** the axial length (40) of the field control electrode (28) is predetermined in such a way that the connection (26) of the connecting conductor (24) also projects at least in part into the field control electrode (28).

**Revendications**

1. Fermeture de tête de câble à l'air libre pour câble à haute tension (5), comprenant un isolateur (1) avec une première et une deuxième zone d'extrémité (2, 3), un isolateur de réception (10) dans la première zone d'extrémité (2) faisant saillie au moins en partie dans un espace intérieur (18) de l'isolateur (1), un élément de commande de champ (8) relié au câble (5), conformé en particulier comme cône de contrainte, qui est relié par insertion à l'isolateur de réception (10) et qui peut, en cas de besoin, être dégagé de celui-ci, ainsi qu'un corps de connexion (21) disposé dans la deuxième zone d'extrémité (3) de l'isolateur (1), auquel le câble (5) peut être électriquement connecté, un agent isolant étant prévu dans l'espace intérieur (18),

   **caractérisée**

   **en ce que** est disposée une électrode de commande de champ (28) entourant l'isolateur de réception (10) à une distance prédéfinie, dont la longueur (40) est au moins approximativement égale à la longueur axiale (46) de la partie de l'isolateur de réception (10) disposée dans l'espace intérieur (18), est disposée dans l'espace intérieur (18), **en ce que** l'isolateur de réception (10) présente à son extrémité (19) disposée dans l'espace intérieur (18) un corps de contact (22) avec lequel le conducteur électrique (6) du câble (5) est électriquement connecté et, en cas de besoin, peut être dégagé,

   et **en ce que** dans l'espace intérieur (18) entre ledit corps de contact (22) et le corps de connexion (21) prévu dans la deuxième zone d'extrémité (3), il est prévu un conducteur de raccordement (24) électriquement relié à celui-ci.

2. Fermeture de tête de câble à l'air libre selon la revendication 1, **caractérisée en ce que** l'électrode de commande de champ (28) dépasse l'isolateur de réception (10) d'une valeur prédéfinie dans l'espace l'intérieur (18) de l'isolateur (1) et /ou **en ce que** le rapport de la longueur (40) de l'électrode de champ (28) à la longueur (46) de l'isolateur de réception (10) est prédéfinie dans la plage entre 0,3 et 3, de préférence entre 1 et 2.

3. Fermeture de tête de câble à l'air libre selon la revendication 1 ou 2, **caractérisée en ce que** l'extrémité libre (34) de l'électrode de commande de champ (28) présente un rayon prédéfini (48) et / ou **en ce que** le rapport dudit rayon (48) à la distance intérieure (44) entre l'extrémité libre (34) et / ou l'électrode de commande de champ (28) et le conducteur de raccordement (24) disposé dans l'isolateur (1) est prédéfini dans la plage entre 0,03 et 0,7, de préférence entre 0,1 et 0,5.

4. Fermeture de tête de câble à l'air libre selon l'une quelconque des revendications 1 à 3, **caractérisée en ce que** l'électrode de commande de champ (28), en particulier son extrémité: libre (34), présente une distance prédéfinie (42) par rapport à l'isolateur (1) l'entourant et/ou présente une distance intérieure prédéfinie (44) par rapport au conducteur de raccordement (24) et / ou **en ce que** le rapport de la distance (42) à la distance intérieure (44) est prédéfinie dans la plage entre 0,1 et 10, de préférence entre 1 et 7.

5. Fermeture de tête de câble à l'air libre selon l'une quelconque des revendications 1 à 4, **caractérisée en ce qu'**il y a comme agent isolant dans l'espace intérieur de l'isolateur (1) un agent isolant sous forme gazeuse, de préférence avec une surpression prédéfinie, et / ou **en ce qu'**il est prévu comme agent isolant du SF6 et / ou du N2 et / ou du SF6-N2 et / ou des mélanges de ceux-ci et / ou **en ce que** l'agent isolant présente une surpression prédéfinie, en particulier dans la plage entre 1-10 bar.

6. Fermeture de tête de câble à l'air libre selon l'une quelconque des revendications 1 à 4, **caractérisée en ce qu'**il est prévu comme agent isolant dans l'espace intérieur de l'isolateur (1) un agent isolant liquide ou de type gel et / ou **en ce qu'**il est prévu un volume de compensation gazeux, de préférence dans la zone supérieure de l'espace intérieur (18) de l'isolateur ou dans un conteneur de compensation externe.

7. Fermeture de tête de câble à l'air libre selon l'une quelconque des revendications 1 à 4, **caractérisée en ce qu'**il est prévu un agent isolant de type mousse dans l'espace intérieur de l'isolateur (1).

8. Fermeture de tête de câble à l'air libre selon l'une quelconque des revendications 1 à 7, **caractérisée en ce que** l'isolateur (1) est configuré comme un isolateur composite qui est configuré comme un tuyau en matière plastique renforcée avec des fibres de verre avec blindage en silicone, ou **en ce que** l'isolateur (1) est configuré comme un isolateur en porcelaine.

9. Fermeture de tête de câble à l'air libre selon l'une quelconque des revendications 1 à 8, **caractérisée en ce que** l'électrode de commande de champ (28) présente un diamètre extérieur s'effilant de manière conique en direction du corps de connexion (21) qui est prévu en particulier dans une plaque de tête disposée dans la deuxième zone d'extrémité (3).

10. Fermeture de tête de câble à l'air libre selon l'une quelconque des revendications 1 à 9, **caractérisée en ce que** l'électrode de commande de champ (28) entoure aussi le corps de contact (22) connecté à l'isolateur de réception (10), lequel corps de contact est de préférence inséré au moins en partie dans la partie d'extrémité (19) de l'isolateur de réception (10) configurée en forme de pot et ouverte en direction de la deuxième zone d'extrémité (3) de l'isolateur (1), et/ou **en ce que** la longueur axiale (40) de l'électrode de commande de champ (28) est prédéfinie de telle manière qu'en plus la connexion (26) du conducteur de raccordement (24) fasse saillie au moins en partie dans l'électrode de commande de champ (28).

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1494329 A1

- WO 03085795 A1